# EUROPEAN PATENT SPECIFICATION

(11) **EP 2 419 464 B1**
(45) Date of publication and mention of the grant of the patent: **13.11.2013**
(21) Application number: 10771827.2
(22) Date of filing: 16.04.2010
(51) Int. Cl.: C08G 12/00

(54) **PROCESS FOR OBTAINING A PHENOL-FORMALDEHYDE RESIN WITH LOW FORMALDEHYDE CONTENT AND RESIN OBTAINED BY THIS PROCESS**
VERFAHREN ZUR GEWINNUNG EINES PHENOL-FORMALDEHYDHARZES MIT GERINGEM FORMALDEHYDGEHALT UND IN DIESEM VERFAHREN GEWONNENES HARZ
PROCÉDÉ DOBTENTION DUNE RÉSINE DE PHÉNOL-FORMALDÉHYDE RENFERMANT PEU DE FORMALDÉHYDE, ET RÉSINE OBTENUE PAR CE PROCÉDÉ

(30) Priority: 16.04.2009 RO 200900318
(43) Date of publication of application: 22.02.2012
(73) Proprietor: Dynea Chemicals OY, 00580 Helsinki (FI)
(72) Inventor: Munteanu, Remus, 505400, Rasnov, Judetul Brasov (RO)
(74) Representative: Derks, Wilbert
(86) International application number: PCT/RO2010/000004
(87) International publication number: WO 2011/005132

(56) References cited:
- US-A- 4 131 582
- US-A1- 2003 096 937
- US-A1- 2008 064 284

## Description

The invention relates to a process for obtaining a phenol-formaldehyde resin with low free formaldehyde content and to the resin obtained by this process, which is particularly used for impregnating various materials such as paper, textile, glass fibres, wood, etc.

From RO patent No. 117 536 there is known a process for obtaining a soluble adhesive by the condensation, in alkaline medium, of the phenol residues resulting from the phenol manufacturing with a formaldehyde solution having 35% concentration, at a temperature of 100°C, for 20 - 60 minutes. In the description there is not mentioned the free formaldehyde content of the resulting product.

In RO patent 116090 there is presented a process for obtaining phenol-formaldehyde resins by the polycondensation of phenol and/or of the derivatives thereof with formaldehyde, which comprises the stages of: i) polycondensation of a derivative or of a mixture of phenol derivatives with formaldehyde, in a molar ratio ranging from 0.5 to 3 moles, in the presence of an acid or basic catalyst, at a temperature between 35 and 250°C; ii) polycondensation of a phenol derivative or of a mixture of phenol derivatives, which are the same as or different from the ones in stage i), with formaldehyde, in a molar ratio ranging from 0.5 to 3 moles, in the presence of an acid or basic catalyst, different from the one in stage i), at a temperature ranging from 35 to 250°C and iii) mixing the products obtained in stages i) and ii) and the possible conditioning of the product by operations of diluting and/or evaporation and/or compounding with different conditioning products.

In the description of the mentioned patent there is not presented or suggested the possibility of obtaining phenol-formaldehyde resins with low free formaldehyde content.

The problem the invention proposes to solve is that of obtaining a phenol-formaldehyde resin with a low free formaldehyde content, namely less than 0.1%.

The invention solves the technical problem by a process for obtaining a phenol-formaldehyde resin by the condensation reaction of phenol with formaldehyde in a basic medium, characterized in that 35 - 50 parts by weight of phenol are condensed with 40 - 60 parts by weight of formaldehyde, in an aqueous medium, by adding basic catalyst, at a temperature of 35 - 65°C, for 2 - 3 hours, then the reaction mass temperature is raised at 70 - 90°C and this temperature is maintained for 1 - 5 hours, until the free phenol content is less than 6%, then there are added, while cooling, 0.1 - 10 parts by weight of melamine and 0.1 - 13 parts by weight of sulphamic acid or its salts and stirring is continued for further 20-40 minutes, thereafter, are added 5-20 parts by weight of 20 to 30 % concentration partly hydrolyzed polyvinyl alcohol solution or 1 to 10% by weight dry ethanol amine, thereafter the reaction mass is cooled down to 20°C and the obtained desired product as clear aqueous yellow-brown coloured solution and a solid matter content of 58 - 68% by weight is discharged.
The phenol-formaldehyde resin as claimed by the invention is obtained by the process defined in claim 1 and has a viscosity, determined by the Ford cup, of 15 - 40 sec, a pH ranging from 7 to 10; density of 1.190 - 1.220 g/cm³, free phenol of less than 6% and free formaldehyde of less than 0.1%.

The invention has the following advantages:
- the obtained product is ecological having a formaldehyde content of less than 0.1%;
- the product is stable in time upon storage at a temperature of 10 - 20 °C;
- the process is easy tn be carried out

There are given hereinafter 3 embodiments having the role of illustrating the invention and not of limiting it.

The raw materials used in the examples were commercially available technical quality products.

The partly hydrolyzed polyvinyl alcohol was obtained, in the known manner, by homopolymerization of the vinyl acetate followed by alkaline hydrolysis of vinyl polyacetate, in the mixer, there being obtained polyvinyl alcohol with a hydrolysis degree higher than 70% and which contains hydrophilic and hydrophobic blocks.

The phenol content was determined chromatographically.

The formaldehyde content in the resin was determined by reaction of the formaldehyde and hydroxylamine hydrochloride and titration of the formed acid with a sodium hydroxide solution up to a pH of 3.5, determined by a pH-meter.

### Example 1

35 g of 100% phenol are introduced into a 1L 3-neck flask provided with stirrer, refrigerating medium and thermometer, and 40 g of 100% formaldehyde as a 45% concentration solution are added thereto. After homogenization, there are added 3g of NaOH as basic catalyst in the form of 50% concentration aqueous solution, for 2 hours, in 5 portions. After completing the catalyst addition, the reaction mass is heated at 80°C and it is maintained' at this temperature for 2 hours, thereafter at 75°C for 3 hours. A sample of about 2 g is taken from the reaction mass and the free phenol content is determined by cromatography . At a value thereof of less than 6% there is started the cooling of the reaction mass and, while cooling, 7 g of melamine and 7 g of urea are added. Cooling is continued down to 30°C and when this temperature is reached, 2 g of sulphamic acid are added and the stirring is continued for 30 minutes. A sample is taken from the reaction mass and the free formaldehyde content is determined. If the obtained value is higher than 0.1%, 2 g of partly hydrolyzed polyvinyl alcohol are then added as 20% concentration solution. Stirring is continued for further 30 minutes, then the reaction mass is cooled down to 20°C and it is discharged.

The obtained product has the following characteristics:
aspect: clear aqueous yellow-brown coloured solution;
solid matter content: 59.5% by weight;
viscosity determined by the Ford cup: 17 sec;
pH = 9;
density: 1.19 g/cm³;
free phenol content: 4.8%;
free formaldehyde content: 0.08%; and
curing time at 120°C:13 min and 40 sec.

### Example 2

There is proceeded similarly as in Example 1, except that instead of partly hydrolyzed polyvinyl alcohol 2 g of triethanol amine are used.

The obtained product has the following characteristics:
aspect: clear aqueous yellow-brown coloured solution;
solid matter content: 59.5% by weight;
viscosity determined by the Ford cup: 25 sec;
pH = 8.9;
density: 1.19 g/cm³;
free phenol content: 4.9%;
free formaldehyde content: 0.07%; and
curing time at 120°C: 13 min and 45 sec.

### Example 3

There is proceeded similarly as in Example 1, except that instead of sodium hydroxide, potassium hydroxide as 50% concentration aqueous solution was used as catalyst. The obtained product has the same physical-chemical characteristics as the ones in Example 1, but in addition, the miscibility in water is much improved.

The resins obtained in the presented examples were used for impregnating paper meant for the melamined systems. The resulting melamined systems met the quality specifications concerning these products.

## Claims

1. A process for obtaining a phenol- formaldehyde resin by the condensation reaction of phenol with formaldehyde in a basic medium, **characterized in that** 35 - 50 parts by weight of phenol are condensed with 40 - 60 parts by weight of formaldehyde, in an aqueous medium, by adding basic catalyst, at a temperature of 35 - 65 °C, for 2 - 3 hours, then the reaction mass temperature is raised at 70 - 90 °C and this temperature is maintained for 1-5 hours, until the free phenol content is less than 6%, then there are added, while cooling, 0.1-10 parts by weight of melamine and 0.1 - 13 parts by weight of sulphamic acid or its salts and stirring is continued for further 20-40 minutes, thereafter, are added 5-20 parts by weight of 20 to 30 % concentration partly hydrolyzed polyvinyl alcohol solution or 1 to 10% by weight dry ethanol amine, thereafter the reaction mass is cooled down to 20 °C and the obtained desired product as clear aqueous yellow-brown coloured solution and a solid matter content of 58 - 68% by weight is discharged.

2. The process of claim 1, wherein the partly hydrolyzed polyvinyl alcohol was obtained by homopolymerization of the vinyl acetate followed by alkaline hydrolysis of vinyl polyacetate.

3. The process of any one of claims 1 to 2, wherein the partly hydrolyzed polyvinyl alcohol has a hydrolysis degree higher than 70% and contains hydrophilic and hydrophobic blocks.

4. A phenol-formaldehyde resin **characterized in that** it is obtained by the process defined in any one of claims 1 to 3 and has a viscosity, determined by the Ford cup, of 15 - 40 sec, pH ranging from 7 to 10, density of 1.190 - 1.220 g/cm³, free phenol less than 6% and free formaldehyde less than 0 1%.

5. The phenol-formaldehyde resin of claim 4, which is stable in time upon storage at a temperature of 10 - 20 °C.

6. Use of phenol-formaldehyde resin obtained by the process according to any one of claims 1 to 3 for impregnating various materials such as paper, textile, glass fibers, wood.

## Patentansprüche

1. Verfahren zum Erhalten eines Phenolformaldehydharzes durch die Kondensationsreaktion von Phenol mit Formaldehyd in einem basischen Medium, **dadurch gekennzeichnet, dass** 35 - 50 Gewichtsteile Phenol mit 40 - 60 Gewichtsteilen Formaldehyd in einem wässrigen Medium durch Hinzusetzen von basischem Katalysator bei einer Temperatur von 35 - 65 °C 2 - 3 Stunden lang kondensiert werden, die Reaktionsmassentemperatur dann auf 70 - 90 °C erhöht und diese Temperatur 1 - 5 Stunden lang gehalten wird, bis der Gehalt an freiem Phenol weniger als 6 % beträgt, dann unter Kühlen 0,1-10 Gewichtsteile Melamin und 0,1-13 Gewichtsteile Sulfaminsäure oder ihre Salze hinzugegeben werden und das Rühren weitere 20 - 40 Minuten lang fortgesetzt wird, daraufhin 5 - 20 Gewichtsteile einer Lösung von teilweise hydrolysiertem Polyvinylalkohol einer Konzentration von 20 - 30 % oder 1-10 Gew.-% trockenes Ethanolamin hinzugegeben werden, daraufhin die Reaktionsmasse auf 20 °C abgekühlt wird und das erhaltene erwünschte Produkt als klare wässrige gelbbraunfarbene Lösung und ein Feststoffgehalt von 58-68 Gew.-% abgelassen werden.

2. Verfahren nach Anspruch 1, wobei der teilweise hydrolysierte Polyvinylalkohol durch Homopolymerisation des Vinylacetats, gefolgt von der alkalischen Hydrolyse von Polyvinylacetat erhalten wurde.

3. Verfahren nach einem der Ansprüche 1 - 2, wobei der teilweise hydrolysierte Polyvinylalkohol einen Hydrolysegrad aufweist, der höher ist als 70 % und hydrophile und hydrophobe Blöcke enthält.

4. Phenolformaldehydharz, **dadurch gekennzeichnet, dass** es durch das in einem der Ansprüche 1 - 3 definierte Verfahren erhalten wird und eine Viskosität, durch den Ford-Becher bestimmt, von 15 - 40 sec, einen pH-Wert im Bereich von 7 - 10, eine Dichte von 1,190 - 1,220 g/cm³, freies Phenol von weniger als 6% und freies Formaldehyd von weniger als 0,1% aufweist.

5. Phenolformaldehydharz nach Anspruch 4, das bei der Lagerung bei einer Temperatur von 10 - 20 °C im Laufe der Zeit stabil ist.

6. Verwendung von Phenolformaldehydharz, das durch das Verfahren nach einem der Ansprüche 1 - 3 erhalten wird, zum Imprägnieren verschiedener Materialien, wie Papier, Textilstoff, Glasfasern, Holz.

## Revendications

1. Procédé d'obtention d'une résine de phénol-formaldéhyde par une réaction de condensation du phénol avec du formaldéhyde en milieu basique, **caractérisé en ce que** 35 - 50 parties en poids de phénol sont condensées avec 40 - 60 parties en poids de formaldéhyde, dans un milieu aqueux, en ajoutant un catalyseur basique, à une température 35 - 65 °C, pendant 2 - 3 heures, puis la température de la masse réactionnelle est augmentée à 70 - 90 °C et cette température est maintenue pendant 1 - 5 heures, jusqu'à ce que la teneur en phénol libre soit inférieure à 6 %, puis, tout en refroidissant, 0,1-10 parties en poids de mélamine et 0,1-13 parties en poids d'acide sulfamique ou de ses sels sont ajoutées et l'agitation est poursuivie pendant encore 20 - 40 minutes, puis 5 - 20 parties en poids d'une solution d'alcool polyvinylique partiellement hydrolysé à une concentration de 20 à 30 % ou 1 à 10% en poids d'éthanolamine anhydride sont ajoutées, puis la masse réactionnelle est refroidie à 20 °C et le produit désiré obtenu sous la forme d'une solution aqueuse, transparente, de couleur jaune-marron et une teneur en matières solides de 58 - 68 % en poids est libéré.

2. Procédé selon la revendication 1, dans lequel l'alcool polyvinylique partiellement hydrolysé est obtenu par homopolymérisation de l'acétate de vinyle, puis par hydrolyse alcaline de de l'acétate de polyvinyle.

3. Procédé selon l'une quelconque des revendications 1 à 2, dans lequel l'alcool polyvinylique partiellement hydrolysé présente un degré d'hydrolyse supérieur à 70 % et comprend des blocs hydrophiles et hydrophobes.

4. Résine de phénol-formaldéhyde, **caractérisée en ce qu'**elle est obtenue par le procédé défini selon l'une quelconque des revendications 1 à 3 et présente une viscosité, déterminée par la coupe Ford, 15 - 40 s, un pH compris dans la plage allant de 7 à 10, une densité 1,190 - 1,220 g/cm³, du phénol libre inférieur à 6 % et du formaldéhyde libre inférieur à 0,1 %.

5. Résine de phénol-formaldéhyde selon la revendication 4, qui est stable dans le temps au cours du stockage à une température 10 - 20 °C.

6. Utilisation d'une résine de phénol-formaldéhyde obtenue par le procédé selon l'une quelconque des revendications 1 à 3 pour l'imprégnation de diverses matières telles que le papier, le textile, les fibres de verre, le bois.
